# EUROPEAN PATENT APPLICATION

(11) **EP 3 061 982 A1**
(43) Date of publication of application: **31.08.2016**
(21) Application number: 14855984.2
(22) Date of filing: 22.10.2014
(51) Int. Cl.: F16C 33/46, C23C 22/07, F16C 19/46, F16C 33/56, F16C 33/66

(54) **RETAINER FOR NEEDLE ROLLER BEARING, AND NEEDLE ROLLER BEARING**

(30) Priority: 25.10.2013 JP 2013222542
(71) Applicant: NSK Ltd., Tokyo 141-8560 (JP)
(72) Inventor: KITAMURA Koichi, Takasaki-shi Gunma 370-3344 (JP); TAKEMURA Hiromichi, Takasaki-shi Gunma 370-3344 (JP)
(74) Representative: Grünecker Patent- und Rechtsanwälte PartG mbB
(86) International application number: PCT/JP2014/078154
(87) International publication number: WO 2015/060371

(57) **Abstract**

This retainer for a needle roller bearing which rotatably supports a planetary gear of a planetary gear mechanism has an annular section and has column sections extending in the direction of the axis from the annular section. Rollers are retained between adjacent column sections. The retainer is used guided by an outer ring and has formed on the outer peripheral surface thereof either a composite coating which contains a phosphate and a solid lubricant which is selected from a soft metallic solid lubricant and a layered crystalline structure substance, or a composite coating which contains a phosphate and a phosphate compound which includes soft metal.

## Description

### TECHNICAL FIELD

The invention relates to a needle roller bearing for supporting a planetary gear of a planetary gear mechanism rotatably and a retainer to be incorporated into the needle roller bearing.

### BACKGROUND ART

In an automatic transmission carried on a vehicle, etc., generally, there is used a planetary gear mechanism. Here, since a needle roller bearing, due to use of a small-diameter roller, can be stored in a space in which a difference between an inner ring outside diameter and an outer ring inside diameter is small. Thus, use of the needle roller bearing for supporting a planetary gear of a planetary gear mechanism rotatably may preferably contribute toward compactification of an automatic transmission incorporating the same.

Recently, to improve fuel economy, etc., there is a tendency that the automatic transmission is shifted to multiple stages. However, since the current automatic transmission uses mainly a four-speed stage, when it is shifted to multiple stages, for example, five- or six-speed stages, the rotation speed and orbital revolution speed of the planetary gear of the planetary gear mechanism used to transmit power increase. With such change of specifications, instead of a conventional so-called whole roller type needle roller bearing using no retainer, there is developed a retainer-equipped needle roller bearing lower in wear and more excellent in lubricating property.

Here, in the planetary gear mechanism, the planetary gear revolves or orbits around a sun gear while rotating on its own axis. In this case, since the needle roller bearing supporting the planetary gear also rotates on its own axis and revolves around the sun gear, centrifugal force generated particularly by the orbital revolution is given to the needle roller bearing. Therefore, when the needle roller bearing equipped with a retainer is used, since the retainer is pressed against an outer ring (planetary gear inner peripheral surface) due to the centrifugal force generated by the orbital revolution, sliding movement is caused to occur between the outer ring and retainer. Such sliding movement raises a fear that the drag resistance of the needle roller bearing can be increased, early wear and abnormal heating can be caused, and the deformation and seizure of the retainer can be incurred.

Thus, in the patent document 1, an electroless nickel film with fluororesin dispersed therein is formed in the retainer, thereby restricting local wear caused by contact between the guide surface of the pocket of the retainer and a roller. However, since the film contains fluoride, the hardness thereof is lowered and, since the fluororesin is easy to repel oil, the holding performance of the lubricating oil is not high. Therefore, under the present circumstance where further speedup is demanded, the film can be worn.

Also, the present applicant proposes, in the patent document 2, a technology to form, on the outer peripheral surface of the retainer, a surface treated layer formed of phosphate, etc. for reducing wear. In a next-generation automatic transmission and an automatic transmission for a hybrid car and electric car, for lower fuel consumption and enhanced efficiency, higher-speed rotation and use under a leaner lubricating environment are demanded and thus further enhanced performance is demanded in the retainer as well.

### RELATED ART REFERENCE

### PATENT DOCUMENT

Patent Document 1: JPA Publication No. 2004-340270
Patent Document 2: JPA Publication No. 2005-76810

### SUMMARY OF THE INVENTION

### PROBLEMS TO BE SOLVED BY THE INVENTION

The invention aims at solving the above problems and has an object to provide a needle roller bearing retainer which is restricted from wearing even under a high-speed rotation and lean lubricating environment, and can rotate smoothly without causing seizure. Also, the invention has an object to provide a needle roller bearing which can provide excellent durability even under a high-speed rotation and lean lubricating environment.

### MEANS FOR SOLVING THE PROBLEMS

In attaining the above objects, the invention provides the below-mentioned needle roller bearing retainer and needle roller bearing.
(1) A needle roller bearing retainer, for supporting the planetary gear of a planetary gear mechanism rotatably, including:
   an annular part; and
   multiple pillar parts extending in the axial direction from the annular part, wherein:
      the retainer holds a roller between the adjoining pillar parts and is used by an outer ring guide system; and
      a composite film containing phosphate and solid lubricant selected from soft metal-based solid lubricant and layer crystal structure material, or, a composite film containing phosphate and phosphorous compound containing soft metal is formed at least on the outer peripheral surface of the retainer.
(2) The needle roller bearing retainer described under (1), wherein the solid Lubricant is tin, molybdenum disulfide or copper.
(3) The needle roller bearing retainer described under (1), wherein the phosphorous compound containing soft metal is tin phosphate.
(4) The needle roller bearing retainer described under any one of (1) to (3), wherein the content of the phosphorous compound including solid lubricant or soft metal in the composite film is 0.1 to 70 mass%.
(5) The needle roller bearing retainer described under any one of (1) to (4), wherein the phosphate is manganese phosphate.
(6) A needle roller bearing for supporting the planetary gear of a planetary gear mechanism rotatably, wherein the needle roller bearing includes the retainer described under any one of (1) to (5) and employs an outer ring guide system.

### ADVANTAGE OF THE INVENTION

The needle roller bearing retainer of the invention, due to a composite film formed of phosphate and specific solid lubricant or phosphate and phosphate compound containing soft metal, can provide a more excellent wear preventive effect than ever and is harder to cause seizure under a high-speed rotation and lean lubricating environment. Also, the composite film is soft and thus it does not damage a partner member (outer ring raceway surface). Therefore, the needle roller bearing of the invention also can provide excellent durability even under the high-speed rotation and lean lubricating environment.

### BRIEF DESCRIPTION OF THE DRAWINGS

Fig. 1 is a section view of an example of a vehicle automatic transmission including a needle roller bearing.
Fig. 2 is an exploded view of a planetary gear mechanism.
Figs. 3A to 3D show the operation principles of the planetary gear mechanism.
Fig. 4 shows a state where a needle roller bearing is incorporated in a planetary gear mechanism.
Fig. 5 is a perspective view of an example of a needle roller bearing retainer.
Fig. 6 is a typical view of a carrier orbital rotation tester.
Fig. 7 shows the surface state of the inside diameter surface of a planetary gear of a comparison example 2.
Fig. 8 shows the surface state of the inside diameter surface of a planetary gear of an embodiment 1.
Fig. 9 shows the surface state of the inside diameter surface of a planetary gear of an embodiment 2.
Fig. 10 shows the surface state of the inside diameter surface of a planetary gear of an embodiment 3.
Fig. 11 shows the surface state of the inside diameter surface of a planetary gear of an embodiment 4.
Fig. 12 shows the surface state of the inside diameter surface of a planetary gear of an embodiment 5.
Fig. 13 shows the surface state of the inside diameter surface of a planetary gear of an embodiment 6.
Fig. 14 shows the surface state of the inside diameter surface of a planetary gear of an embodiment 7.
Fig. 15 shows the surface state of the inside diameter surface of a planetary gear of an embodiment 8.

### MODES FOR CARRYING OUT THE INVENTION

Description is given below of the invention specifically with reference to the drawings.

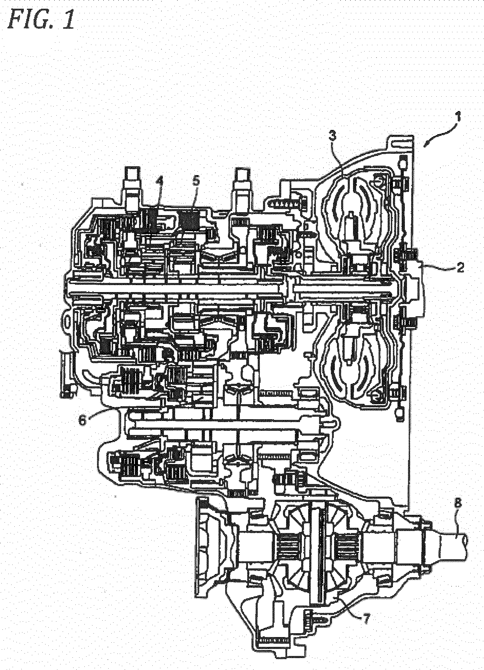

Fig. 1 is a section view of an example of a vehicle automatic transmission including a needle roller bearing. In the illustrated automatic transmission 1, torque output from a crankshaft 2 of an engine is transmitted through a torque converter 3, is reduced in multiple stages through planetary gear mechanisms 4, 5, 6, etc. combined in multiple rows, and is then output through a differential gear 7 and a drive shaft 8 to a wheel (not shown).

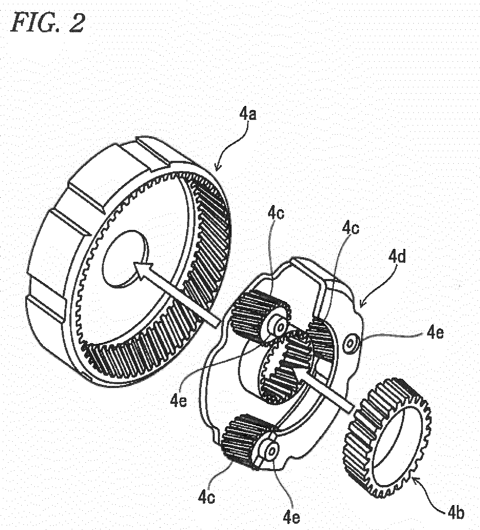

Fig. 2 is an exploded view of the planetary gear mechanism 4 (5, 6 are in principle similar). In Fig. 2, the planetary gear mechanism 4 includes a ring gear 4a having internal teeth, a sun gear 4b having external teeth, three planetary gears 4c meshed with the ring gear 4a and sun gear 4b, and a carrier 4d supporting the planetary gears 4c rotatably by three pinion shafts 4e and rotatable itself.

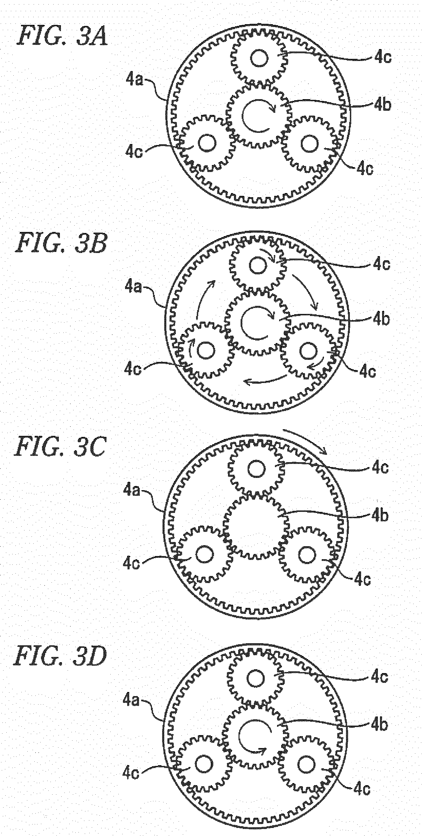

The operation principle of the planetary gear mechanism is shown in Figs. 3A to 3D. Firstly, in the case of a first gear speed, as shown in Fig. 3A, when the sun gear 4b is set as the drive side, planetary gears 4c (carrier) are set as the driven side, and ring gear 4a is fixed, a large reduction ratio can be obtained. Next, in the case of a second gear speed, as shown Fig. 3B, when the sun gear 4b is fixed, planetary gears 4c (carrier) are set as the driven side and ring gear 4a is set as the drive side, an intermediate reduction ratio can be obtained. Further, in the case of a third gear speed, as shown in Fig. 3C, when the sun gear is fixed, planetary gears 4c (carrier) are set as the drive side and ring gear 4a is set as the driven side, a small reduction ratio can be obtained. Here, in retreating, as shown Fig. 3D, when the sun gear 4b is set as the driven side, planetary gears 4c (carrier) are fixed and ring gear 4a is set as the drive side, output can be reversed with respect to input. Here, the above operation is an example of the operation of the planetary gear mechanism 4 and is not limitative.

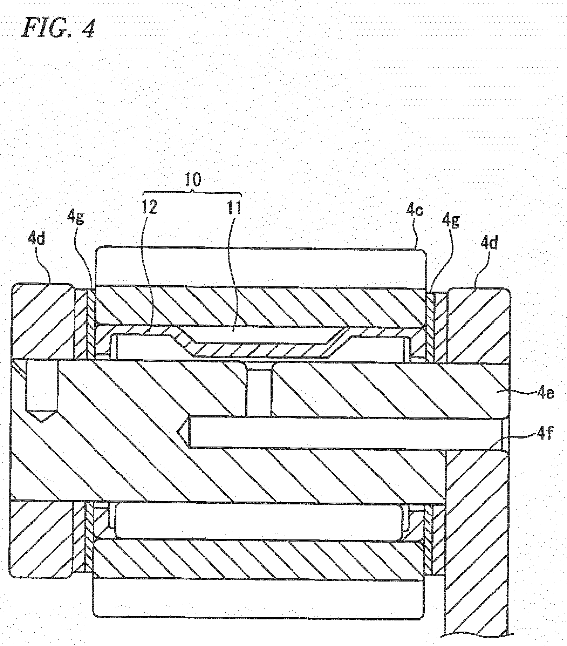

Fig. 4 shows a state where a needle roller bearing is incorporated in a planetary gear mechanism. As shown in Fig. 4, a needle roller bearing 10 is interposed between the pinion shaft (inner ring) 4e and planetary gear (outer ring) 4c and supports the planetary gear 4c rotatably. The needle roller bearing 10 includes multiple rollers 11 and a needle roller bearing retainer (which is hereinafter called a retainer simply) 12 for holding the rollers. Within the pinion shaft 4e, there is formed an oil path 4f extending along the axial line from right in Fig. 4 and piercing in the central portion thereof to the outer peripheral surface thereof, while lubricant oil can be supplied to the oil path. The retainer 12 is used by an outer ring guide system. Here, between the carrier 4d and planetary gear 4c, there is arranged a washer 4g.

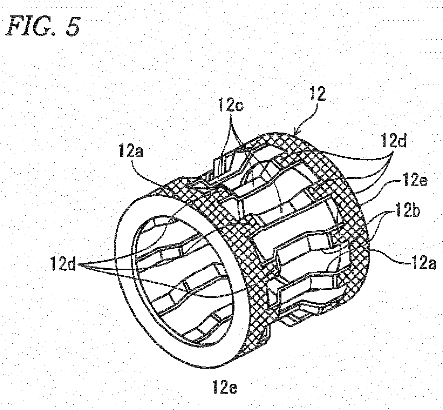

Fig. 5 is a perspective view of the retainer 12. As shown here, the retainer 12 has a structure where a pair of annular parts 12a are connected together by multiple pillar parts 12b. A space between two adjoining pillar parts 12b provides a pocket for holding a roller 11. Each pillar part 12b has, in the axial-direction central portion, a reduced diameter portion 12c which is reduced in diameter (that is, is made closer to the axial line of the retainer 12), while the outer peripheral surface thereof (in Fig. 5, shown by double hatching) enlarged in diameter from the axial-direction two sides of the reduced diameter portion 12c to the annular part 12a is set as an outside-diameter guide surface (that is, a surface slidable in contact with the outer ring). The retainer 12 having this shape is called an M type retainer. Also, a sheet of steel plate is punched to form a pillar part and, after then, the two ends of the pillar part are welded together, thereby forming the retainer 12.

According to the invention, at least on the outer peripheral surface of the retainer 12, there is formed a composite film containing phosphate and specific solid lubricant selected from soft metal-based solid lubricant and layer crystal structure material, or a composite film containing phosphate and a soft metal containing phosphorous compound. Since this composite film can provide a friction reduction effect due to phosphate and, in addition, a lubricating action due to the specific solid lubricant or the soft metal containing phosphorous compound, even in the case of high speed rotation under a lean lubricating environment, wear of the outer peripheral surface of the retainer 12 can be reduced further. Also, since the composite film is soft, its partner member (outer ring raceway surface) is prevented against damage.

Phosphate is not limitative. For example, manganese phosphate, zinc phosphate, iron phosphate and calcium phosphate can be used; and, manganese phosphate is particularly preferred.

Soft metal-based solid lubricant is not limitative either. That is, soft metal widely used as solid lubricant, for example, gold, silver, zinc, tin and copper can be used; and, tin and copper are preferred. Also, the layer crystal structure material is not limitative either. That is, layer crystal structure material widely used as solid lubricant, for example, molybdenum disulfide, tungsten disulfide, graphite, graphite fluoride and boron nitride can be used; and, molybdenum disulfide is preferred.

Among them, the soft metal-based solid lubricant is particularly preferred because it can enhance the adsorption property of lubricant oil.

Also, the phosphorous compound containing soft metal is a compound constituted of phosphor, oxygen and soft metal; and, tin phosphate is particularly preferred.

The content of the specific solid lubricant or phosphorous compound may preferably be 0.1 70 mass% of the whole quantity of the composite film. When less than 0.1 mass%, no improvement cannot be made when compared with the conventional manner using phosphate alone, and, when more than 70 mass%, initial comformability is lowered and sliding performance is low when compared with use of phosphate alone. The content of the specific solid lubricant or phosphorous compound may preferably be 1 - 60 mass% and, more preferably, 10 - 50 mass%. Here, the specific solid lubricant or phosphorous compound may also be used by mixing two or more kinds of them and, when they are used by mixing, a total content of the mixture may provide the above-mentioned content.

The method of forming the composite film is not limitative either. A chemical conversion treatment, which has been widely used in forming a phosphate-based film, may preferably be convenient: for example, a method in which the retainer 12 pretreated such as washed or degreased is immersed in a mixture containing phosphate and specific solid lubricant or phosphorous compound; and, a method in which, after the retainer 12 is immersed in phosphate solution to form a film formed of phosphate, the retainer 12 is immersed in specific solid lubricant solution or phosphorous compound solution. In the former case, the film is constituted of phosphate as the base material thereof, with the specific solid lubricant or phosphorous compound dispersed therein. In the latter case, the specific solid lubricant or phosphorous compound is embedded in the recesses or cracks of the surface of the film constituted of phosphate.

Here, to enhancing adhesion of the composite film, the outer peripheral surface of the retainer 12 before formation of the film may preferably be roughened. The degree of the roughened surface may preferably be 1.5 µm Ra or smaller. Although the material of the retainer 12 is not limitative, preferably, carburizing treatment or carbonitriding treatment, etc. may be performed on steel material such as SPCC or SCM415 to thereby harden the surface thereof to HV600 or higher.

The thickness of the composite film may preferably be 1 - 30 µm and, more preferably, 5 *-* 10 µm. When less than 1 µm, the performance of the retainer remains the same as when the composite film is not formed, failing to obtain a wear reduction effect and, even when obtained, such effect disappears early. Also, when more than 30 µm, crystal grain is coarsened, thereby facilitating the composite film to peel.

Also, while the needle roller bearing is lubricated by lubricating oil, the lubricating oil is not limitative but various kinds of automatic transmission oil (ATF) can be used. It may preferably contain oily agent, because it can enhance adsorption to the composite film and thus improve the wear preventive effect. The oily agent can include, for example, fatty acid such as oleic acid and stearic acid; fatty acid alcohol such as oleyl alcohol; fatty acid ester such as polyoxyethylene stearate ester and polyglyceryl oleate ester; and, phosphoric ester such as phosphoric acid, tricresyl phosphate, rauryl acid ester or polyoxyethylencoleylether phosphoric acid.

Also, to the lubricating oil, as the need arises, there may also be added other additive such as antioxidant and anti-wear agent.

### Embodiments

The invention is further described below with reference to embodiments and comparison examples, but the invention is not limited to them at all.

### (Embodiments 1 - 4, comparison examples 1 - 2)

SCM 415 material is worked to produce a needle roller bearing retainer as shown in Fig. 5, and a carbonitriding treatment is performed on the retainer. And, as shown in Table 1, in a comparison example 2, a manganese phosphate film is formed and, in examples 1 - 4, a composite film of manganese phosphate and tin phosphate is formed, thereby producing test retainers respectively. Here, in a comparison example, no film is formed but a test retainer made of SCM 415 as it is is used as a test retainer.

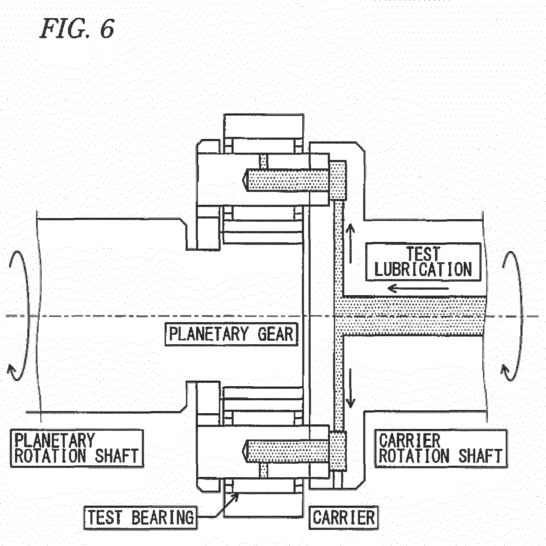

And, the test retainers are incorporated into needle roller bearings to thereby form test bearings and the test bearings are mounted on a carrier orbital rotation tester shown in Fig. 6 and are operated under the following condition A or a condition B. After tested, the outer peripheral surfaces of the test retainers are observed to thereby evaluate the peeling of the films, etc. The results are shown in Table 1.

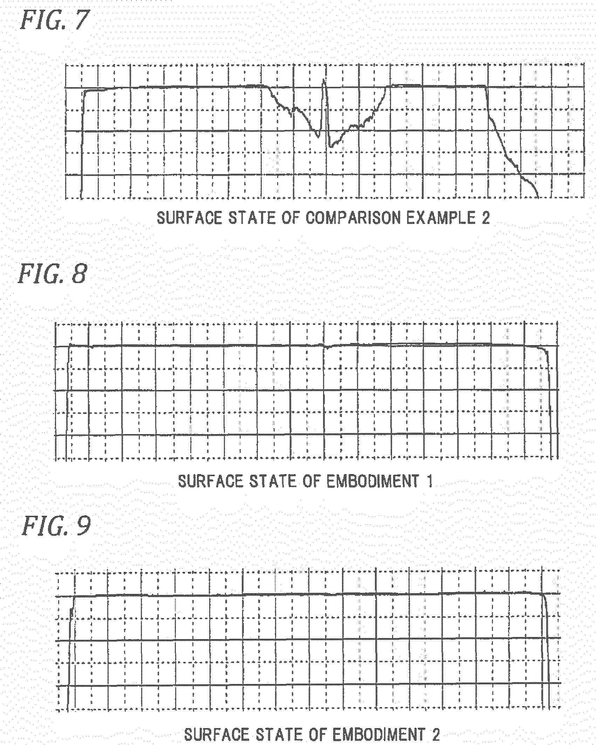

Also, the roughness of the inside diameter surface of a planetary gear serving as a partner member is measured using a surface roughness measuring device. The results are shown in Table 1 and Figs. 7 - 11.

| |
|---|
| [Condition A] |
| Carrier rotation number: 7600 min-1 |
| Pinion rotation number: 9300 min-1 |
| Lubricant: ATF |
| Lubricant supply quantity: 0.03 L /min/ opinion |
| Lubricant temperature: 120°C |
| Test time: 200 hours |
| [Condition B] |
| Carrier rotation number: 8000 min-1 |
| Pinion rotation number: 13500 min-1 |
| Lubricant: ATF |
| Lubricant supply quantity: 0.03 L / min / pinion |
| Lubricant temperature: 120°C |
| Test time: 200 hours |

**Table 1**

| | Comparison example 1 | Comparison example 2 | Embodiment 1 | Embodiment 2 | Embodiment 3 | Embodiment 4 |
|---|---|---|---|---|---|---|
| Retainer material | SCM415 | SCM415 | SCM415 | SCM415 | SCM415 | SCM415 |
| Heat treatment | carbonitriding | carbonitriding | carbonitriding | carbonitriding | carbonitriding | carbonitriding |
| Surface treatment | No | Film of manganese phosphate | Composite film of manganese phosphate and tin phosphate | Composite film of manganese phosphate and tin phosphate | Composite film of manganese phosphate and tin phosphate | Composite film of manganese phosphate and tin phosphate |
| Film thickness | - | 1 µm | 1 µm | 5 µm | 30 µm | 10 µm |
| Ratio of phosphate compound to phosphate in composite film | - | - | 70% | 50% | 0.1% | 10% |
| Test condition | A | A | A | B | A | B |
| Retainer outer peripheral surface | Seizure and abnormal wear are detected. | Film peels and base material wear is detected. | Slight film peeling is detected but base material wear is not detected. | Slight film peeling is detected but base material wear is not detected. | Slight film peeling is detected but base material wear is not detected. | Slight film peeling is detected but base material wear is not detected. |
| Planetary gear inside diameter surface | Seizure and abnormal wear are detected. Measurement is impossible. | See Fig. 7. Abnormal wear is detected. | See Fig. 8. No abnormality is detected. | See Fig. 9. No abnormality is detected. | See Fig. 10. No abnormality is detected. | See Fig. 11. No abnormality is detected. |
| Evaluation | × | Δ | ○ | ○ | ○ | ○ |

As shown in Table 1, in the manganese phosphate film of the comparison example 2, strong sliding traces are detected on the outer peripheral surface of the retainer and the inside diameter surfaces of the planetary gears, the base material of the retainer and the inside diameter surfaces of the planetary gears are metal contacted with each other, thereby causing abnormal wear. Meanwhile, as in examples 1 - 4, in the case of the composite film formed of manganese phosphate and tin phosphate, no abnormal wear is detected but good test results are obtained when compared with the tin manganese film.

Also, as in the embodiments 2 and 4, also under the test condition B where the rotation speed is further increased, no abnormal wear is detected but good test results are obtained.

### (Embodiment 5 - 8)

Excepting that a composite film is formed of molybdenum disulfide instead of tin phosphate and manganese phosphate, similarly to the embodiments 1 - 4, test retainers are produced.

The test retainers are incorporated into needle roller bearings to form test bearings. The test bearings are mounted on the carrier orbital rotation tester shown in Fig. 6 and are operated under the above-mentioned condition A or B. After tested, the outer peripheral surfaces of the test retainers are observed to thereby evaluate the peeling of the films, etc. The results are shown in Table 2.

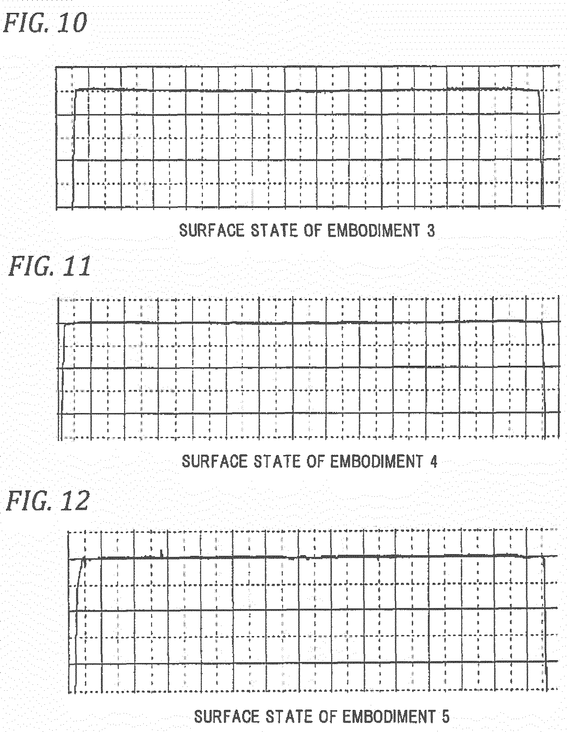

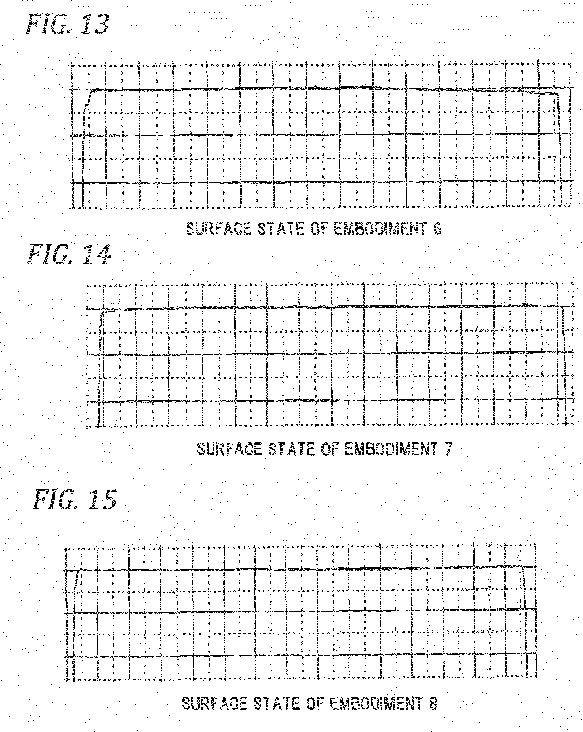

Also, the roughness of the inside diameter surface of a planetary gear serving as a partner member is measured using a surface roughness measuring device. The results are shown in Table 2 and the section views of Figs. 12 - 15.

**Table 2**

| | Embodiment 5 | Embodiment 6 | Embodiment 7 | Embodiment 8 |
|---|---|---|---|---|
| Retainer material | SCM415 | SCM415 | SCM415 | SCM415 |
| Heat treatment | carbonitriding | carbonitriding | carbonitriding | Carbonitriding |
| Surface treatment | Composite film of manganese phosphate and molybdenum disulfide | Composite film of manganese phosphate and molybdenum disulfide | Composite film of manganese phosphate and molybdenum disulfide | Composite film of manganese phosphate and molybdenum disulfide |
| Film thickness | 1µm | 5µm | 30µm | 10µm |
| Ratio of solid lubricant to phosphate in composite film | 70% | 50% | 0.1% | 10% |
| Test condition | A | B | A | B |
| Retainer appearance | Slight film peeling is detected but no base material wear is detected. | Slight film peeling is detected but no base material wear is detected. | Slight film peeling is detected but no base material wear is detected. | Slight film peeling is detected but no base material wear is detected. |
| Gear inside diameter surface shape | See Fig. 12. No abnormality is detected. | See Fig. 12. No abnormality is detected. | See Fig. 12. No abnormality is detected. | See Fig. 12. No abnormality is detected. |
| Evaluation | ○ | ○ | ○ | ○ |

As shown in Table 2, similarly to the embodiments 1- 4, in the case of the composite film formed of manganese phosphate and molybdenum disulfide, no abnormal wear is detected and, as in the embodiments 6 and 8, also under the test condition B where the rotation speed is further increased, no abnormal wear is detected but good test results are obtained.

Although the invention has been described specifically with reference to the specific embodiments thereof, it is obvious to persons skilled in the art that various changes or modifications can be made without departing from the spirit and scope of the invention.

This application is based on the Japanese Patent Application (JPA No. 2013-222542) filed on Oct. 25, 2013 and thus the contents thereof are incorporated herein for reference.

### INDUSTRIAL APPLICABILITY

The needle roller bearing of the invention is useful in the rotation speedup of a planetary gear mechanism for use in an automatic transmission carried on a vehicle, etc.

### DESCRIPTION OF REFERENCE NUMERALS AND SIGNS

- 1:: Automatic transmission
- 4 - 6:: Planetary gear mechanism
- 10:: Needle roller bearing
- 11:: Roller
- 12:: Retainer

## Claims

1. A needle roller bearing retainer, for supporting the planetary gear of a planetary gear mechanism rotatably, comprising:
an annular part; and
multiple pillar parts extending in the axial direction from the annular part, wherein:
the retainer holds a roller between the adjoining pillar parts and is used by an outer ring guide system;
a composite film containing phosphate and solid lubricant selected from soft metal-based solid lubricant and layer crystal structure material, or, a composite film containing phosphate and phosphorous compound containing soft metal is formed at least on the outer peripheral surface of the retainer.

2. The needle roller bearing retainer according to Claim 1, wherein
the solid lubricant is tin, molybdenum disulfide or copper.

3. The needle roller bearing retainer according to Claim I, wherein
the phosphorous compound containing soft metal is tin phosphate.

4. The needle roller bearing retainer according to any one of Claims 1 to 3, wherein
the content of the phosphorous compound including solid lubricant or soft metal in the composite film is 0.1 to70 mass%.

5. The needle roller bearing retainer according to any one of Claims I to 4, wherein
the phosphate is manganese phosphate.

6. A needle roller bearing for supporting the planetary gear of a planetary gear mechanism rotatably, wherein
the needle roller bearing includes the retainer according to any one of Claims I to 5 and employs an outer ring guide system.
